# EUROPEAN PATENT APPLICATION

(11) **EP 4 652 831 A1**
(43) Date of publication of application: **26.11.2025**
(21) Application number: 25176289.4
(22) Date of filing: 14.05.2025
(51) Int. Cl.: A01G 2/38

(54) **PLIERS FOR STABILIZING A GRAFT PERFORMED ON HERBACEOUS PLANTS**

(30) Priority: 16.05.2024 IT 202400002104 U
(71) Applicant: Grafting & Technology S.r.l., 62010 Montefano (MC) (IT)
(72) Inventor: CAMILLETTI, Fausto, 62019 RECANATI (MC) (IT)
(74) Representative: Baldi, Claudio

(57) **Abstract**

Pliers for stabilizing a graft performed on plants; said pliers comprise a pair of identical branches (1), each having a prehensile jaw (10) with a substantially C-shaped groove (10a) and posteriorly comprising a lever (11) arranged in divergent position and provided with an enlarged tubular edge (11a); when the jaws (10) are closer to each other, the two grooves (10a) define a tubular duct (12) suitable for tightening the grafting point between the scion and the rootstock; the pliers have a bracket (2) of semicircular shape disposed between the two branches (1) that acts as pivot point and elastic element for spreading the jaws (10) apart; the peculiarity of the pliers (P) consists in the fact that each of the grooves (10a) provided on the two prehensile jaws (10) is provided at its concave inner surface with a toothed profile (10a') that extends circularly in the respective groove (10a).

## Description

The present patent application for industrial invention relates to a pair of pliers for stabilizing a graft that is preferably performed on herbaceous plants.

The peculiarities and advantages of the new pliers in question will become more apparent following a brief description of the prior art and its drawbacks.

As it is known, grafting is an agronomic practice designed to join two different plants, respectively defined as "rootstock" and "scion", wherein the rootstock is the basal part of the future plant that is originated with the graft, and the scion constitutes its aerial part.

More specifically, the scion is exactly overlapped on the rootstock and held in such a position for as long as necessary to favor the interpenetration of the fibers of the two components and thus the actual rooting of the graft.

Such a practice is widely used to make grafts on herbaceous plants, and particularly on horticultural species, such as tomatoes, eggplants, peppers, cucumbers, melons and watermelons, and provides for clamping together and protecting the scion and the rootstock for as long as necessary for rooting by means of special pliers provided with a monolithic structure made by molding plastic materials.

Specifically, the typical pliers that are currently used comprises an interfaced pair of branches, wherein each branch is anteriorly provided with a prehensile jaw and inferiorly provided with an operating lever in diverged position.

The pivot point between the two branches is disposed in intermediate position between the prehensile jaws and the respective operating levers and basically consists of an elastically deformable bridge.

In such a condition, in order to spread the two prehensile jaws apart, the user must bring the two levers closer to each other to compress the elastic element provided between the two branches, in such a way that, as soon as the user's action on said levers has ceased, the elastic element brings the two prehensile jaws closer to each other.

Moreover, it must be noted that the two prehensile jaws of a pair of such traditional pliers are provided with substantially C-shaped grooves that extend for the full height of said jaws; thus, when the two jaws are brought closer, they define a substantially cylindrical tubular duct suitable for exactly accommodating and tightening the section of the plant where the contact between the scion and the rootstock occurs.

As it is known, such a pair of pliers is progressively affected by the growing thickness of the scion, meaning that such a growth favors a gradual spontaneous divarication of the jaws of said pliers, up to the point in which the width of such a divarication is larger than the diameter of the circumference of the scion, thus causing the automatic detachment of the pliers.

In spite of the fact that the aforementioned traditional pliers have experienced a significant popularity on the market, a careful evaluation of their practical effectiveness has revealed a rather significant drawback.

Indeed, it should be considered that the C-shaped grooves provided on the prehensile jaws of a pair of traditional pliers have a smooth inner surface or, at most, a surface provided with notches that develop along the length of said grooves.

In both cases, it has been ascertained that such a pair of branches favors, or at least does not effectively counteract the tendency of the scion to slide relative to the respective rootstock while growing.

The first purpose of the present invention is to endow the branches of a pair of grafting pliers with the ability to ensure a reliable connection between the scion and the respective rootstock while growing, preventing any undesirable mutual sliding movement.

An additional drawback of the traditional pliers described above relates to the poor compactness and poor balance of the two branches of such a pair of pliers during the transition from the idle position to the operating position, and vice versa.

The second purpose of the present invention is to ensure that the new pliers in question are characterized by a reliable compactness and balance in all conditions of use.

The main purpose of the present invention has been achieved in accordance with the features listed in the attached independent claim 1.

Advantageous embodiments of the invention appear in dependent claims.

For the sake of explanatory clarity, the description of the invention continues with reference to the attached drawing, which is for illustrative and non-limiting purposes only, wherein:

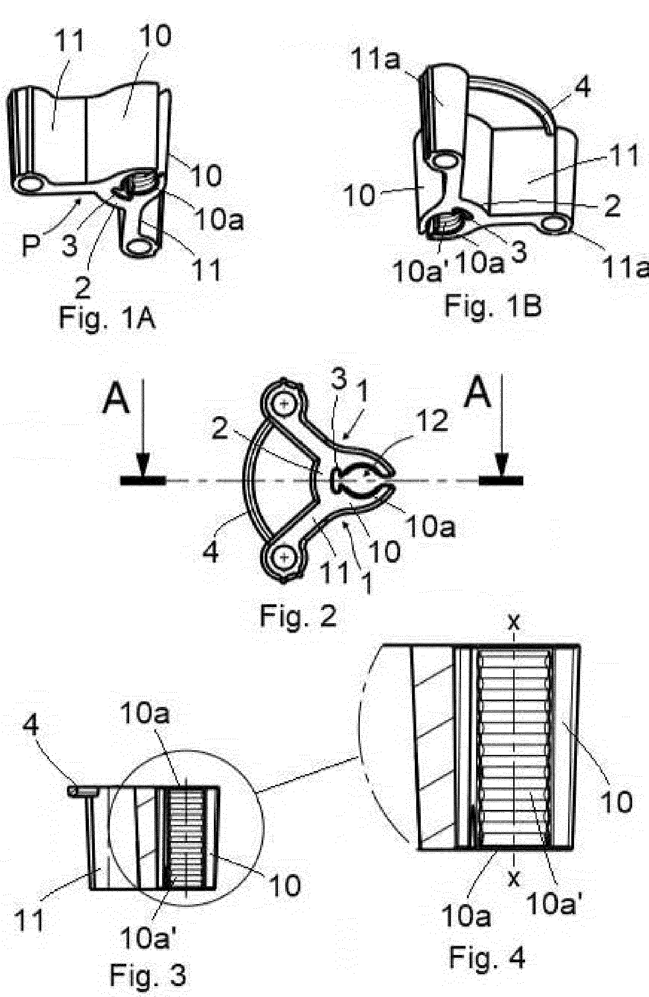

- Figs. 1A and 1B are two different views of the new pliers in question;
- Fig. 2 is a top view of the pliers in question;
- Fig. 3 is a sectional view with the plane A-A of the pliers in Fig. 2;
- Fig. 4 is a partial enlarged view of Fig. 3;
- Fig. 5 is a diagrammatic sectional view of the pliers according to the invention that shows the operating position of the pliers during the tightening of a graft.

With reference to the attached figures, the new pliers (P) in question are usually provided with a structure made of elastically deformable plastic materials and usually comprise:
- an interfaced pair of identical spreadable branches (1), in which each of said branches comprises a prehensile jaw (10) that is anteriorly provided with a substantially C-shaped groove (10a) for its entire height and is posteriorly provided with a lever (11) arranged in divergent position and provided with an enlarged tubular edge (11a) at its end; wherein, when the jaws (10) are brought closer to each other, the two grooves (10a) provided in the two jaws (10) define a tubular duct (12) suitable for tightening the grafting point between the scion (M) and the rootstock (PI);
- a bracket (2) of substantially semicircular shape, with concavity facing the jaws (10), disposed between the two branches (1) in such a way to act as pivot point and elastic element for spreading the jaws (10) apart when the two levers (11) are brought closer to each other by the user and bringing the jaws closer (10) to each other as soon as the user's fingers release the two levers (11);
- a slot (3) of a substantially semicircular shape arranged in intermediate position between the bracket (2) and the tubular duct (12) defined by the two prehensile jaws (10); wherein said slot (3) is joined to the tubular duct (12) by means of a front notch (3a) suitable for spreading apart when the two prehensile jaws (10) are divaricated.

Starting from such a traditional configuration, the first peculiarity of the new pliers in question (P) lies in the fact that each of the grooves (10a) provided on the two prehensile jaws (10) is provided at its concave inner surface with a toothed profile (10a') that extends circularly in the respective groove (10a).

Preferably, the teeth of said toothed profile (10a') are orthogonal to the longitudinal axis x-x of the respective groove (10a).

Such a toothed profile (10a'), which affects the two inner surfaces of the tubular duct (12) and is thus suitable for "biting" all around the plant at the grafting point, gives the new pliers in question (P) the advantageous ability to effectively counteract the tendency of the scion to slide with respect to the underlying rootstock.

More precisely, it can be said that the function of the teeth of such a toothed profile (10a') is to prevent the scion (M) from sliding and misaligning with respect to the underlying rootstock (PI), favoring its perfect rooting since it is forced to maintain a perfect and stable alignment with the rootstock (PI).

Moreover, it must be considered that the plants are often wet, in a condition that certainly increases the tendency of the scion (M) to slide with respect to the underlying rootstock (PI); in such situations, the retention function exerted by the teeth of the toothed profile (10a') with respect to the scion (M) is even more effective.

A further peculiarity of the new pliers in question (P) lies in the fact that the tubular duct (12) defined by the two prehensile jaws (10) has a truncated-conical profile.

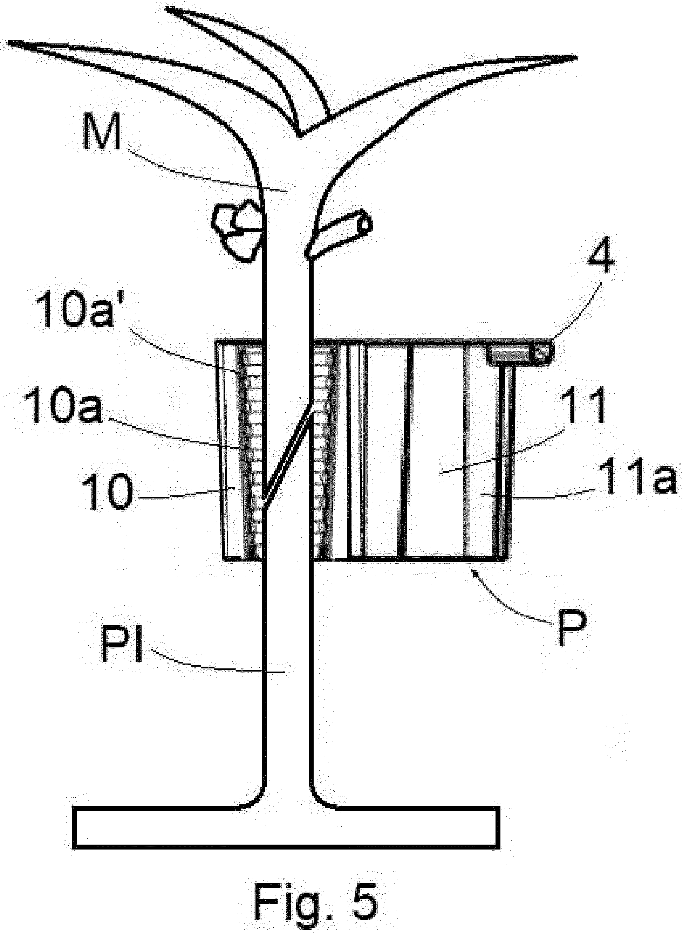

Such a provision implies that the pliers (P) are tightened to a graft in such a way that its truncated-conical duct (12) directs the end with largest section upward, that is, in the direction of the so-called "scion-side", as shown in Fig. 5.

Due to such an operating position, the pliers (P) have the ability to provide an even firmer "no-slip" grip at the point of interference between the scion (M) and the rootstock (PI), supporting at the same time the natural tendency of the scion (M) to increase its thickness to a greater extent than the rootstock (PI) while growing.

Preferably, it is provided that the two prehensile jaws (10) of the pliers (P) have a similar conical profile also at their outer walls.

A further peculiarity of the new pliers in question (P) consists in the adoption of a curved bridge (4) that connects the two levers (11) near the enlarged tubular edge (11a).

Since the bridge (4) is elastically deformable, just like the monolithic pliers (P) it is evident that the bridge (4) is suitable for undergoing a compression when the two levers (11) are brought closer together, and also for discharging an effective spreading force on the levers (11) as soon as the force that had previously caused its compression has ceased.

In view of the above, it is understood how the elastic action exerted by said bridge (4) is in addition to that exerted by the bracket (2), certainly ensuring a better functionality of the new pliers in question (P).

## Claims

1. Pliers (P) for stabilizing a graft performed on herbaceous plants, provided with a monolithic structure made of a plastic material and comprising:
- an interfaced pair of branches (1), wherein each of said branches (1) anteriorly comprises a prehensile jaw (10) provided with a C-shaped groove (10a) for its entire height, and posteriorly comprises a lever (11) arranged in divergent position and comprising an enlarged tubular edge (11a) at its end; wherein, when the jaws (10) are brought closer, said two grooves (10a) of the two jaws (10) define a tubular duct (12) suitable for tighten a point of contact between the scion and the rootstock;
- a bracket (2) of substantially semicircular shape, with concavity facing the jaws (10), interposed between the two branches (1) in such a way to act as pivot point and elastic element for spreading the jaws (10) apart when the two levers (11) are brought closer by the user's fingers and bringing the jaws (10) closer as soon as the interference exerted by the user's fingers on the two levers (11) has ceased;
**characterized by** the fact that each of said grooves (10a) provided on the two prehensile jaws (10) is provided at its concave inner surface with a toothed profile (10a') that extends circularly in the respective groove (10a).

2. The pliers (P) according to claim 1, wherein the teeth of the toothed profile (10a') provided on the inner surface of the groove (10a) are orthogonal to the longitudinal axis x-x of said groove (10a).

3. The pliers (P) according to one of the preceding claims, wherein the tubular duct (12) defined by the two jaws (10) has a truncated-conical profile.

4. The pliers (P) according to one of the preceding claims, wherein the prehensile jaws (10) are externally provided with a conical profile.

5. The pliers (P) according to one of the preceding claims, wherein said pliers (P) comprise a curved bridge (4) that joins the two levers (11) near their enlarged tubular edge (11a).

6. The pliers (P) according to one of the preceding claims, wherein said pliers (P) comprise a slot (3) having a substantially semicircular profile and arranged in intermediate position between said bracket (2) and said tubular duct (12) defined by the two prehensile jaws (10); wherein said slot (3) is joined to said tubular duct (12) by means of a frontal notch (3a) suitable for diverging when the two prehensile jaws (10) diverge.
